(19) Europäisches Patentamt
European Patent Office
Office européen des brevets

(11) EP 1 677 600 B1

(12) **EUROPÄISCHE PATENTSCHRIFT**

(45) Veröffentlichungstag und Bekanntmachung des Hinweises auf die Patenterteilung:
**24.06.2009 Patentblatt 2009/26**

(21) Anmeldenummer: **04790624.3**

(22) Anmeldetag: **19.10.2004**

(51) Int Cl.:
***A01N 43/653*** *(2006.01)* ***A01N 43/30*** *(2006.01)*

(86) Internationale Anmeldenummer:
**PCT/EP2004/011800**

(87) Internationale Veröffentlichungsnummer:
**WO 2005/039294 (06.05.2005 Gazette 2005/18)**

(54) **FUNGIZIDE WIRKSTOFFKOMBINATIONEN ENTHALTEND SPIROXAMINE, PROTHIOCONAZOLE UND TEBUCONAZOLE**

FUNGICIDAL ACTIVE COMBINATIONS SPIROXAMINE, PROTHIOCONAZOLE AND TEBUCONAZOLE

ASSOCIATIONS DE PRINCIPES ACTIFS FONGICIDES CONTENANT DE LA SPIROXAMINE, DU PROTHIOCONAZOLE ET DU TEBUCONAZOLE

(84) Benannte Vertragsstaaten:
**AT BE BG CH CY CZ DE DK EE ES FI FR GB GR HU IE IT LI LU MC NL PL PT RO SE SI SK TR**

(30) Priorität: **23.10.2003 DE 10349503**

(43) Veröffentlichungstag der Anmeldung:
**12.07.2006 Patentblatt 2006/28**

(73) Patentinhaber: **Bayer CropScience Aktiengesellschaft**
**40789 Monheim (DE)**

(72) Erfinder:
- **MAULER-MACHNIK, Astrid**
**42799 Leichlingen (DE)**
- **KERZ-MÖHLENDICK, Friedrich**
**51377 Leverkusen (DE)**
- **DUTZMANN, Stefan**
**40764 Langenfeld (DE)**
- **DAHMEN, Peter**
**41470 Neuss (DE)**

(56) Entgegenhaltungen:
**EP-A1- 0 393 746**
**EP-A1- 0 627 163**
**WO-A1-96/38040**
**WO-A1-96/41533**
**WO-A1-98/47367**
**WO-A2-01/37666**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 677 600 B1

Printed by Jouve, 75001 PARIS (FR)

## Beschreibung

Die Erfindung betrifft eine Wirkstoffkombination aus dem bekannten 8-tert-Butyl-1,4-dioxaspiro[4.5]decan-2-ylmethyl(ethyl)(propyl)amin (Spiroxamine) und weiteren bekannten Wirkstoffen, die sehr gut zur Bekämpfung von phytopathogenen Pilzen geeignet ist.

Es ist bereits bekannt, dass 8-tert-Butyl-1,4-dioxaspiro[4.5]decan-2-ylmethyl(ethyl)(propyl)amin (Spiroxamine) fungizide Eigenschaften besitzt (vgl. EP-A-0 281 842). Die Wirksamkeit dieses Stoffes ist gut, lässt aber bei niedrigen Aufwandmengen in manchen Fällen zu wünschen übrig.

Ferner ist schon bekannt, dass zahlreiche Azol-Derivate zur Bekämpfung von Pilzen eingesetzt werden können (vgl. Pesticide Manual, 11th. Edition (1997), Seite 1144; WO 96/16048). Auch die Wirkung dieser Stoffe ist aber bei niedrigen Aufwandmengen nicht ausreichend.

Ternäre Wirkstoffkombinationen aus Spiroxamine, Tebuconazole und einem weiteren Conazol-Fungizid sind auch bekannt (WO 96/41533, WO 96/38040).

Es wurde nun gefunden, dass eine Wirkstoffkombination aus 8-tert-Butyl-1,4-dioxaspiro[4.5]decan-2-ylmethyl (ethyl)(propyl)amin (Spiroxamine) (Referenz: EP-A 0 281 842) der Formel (I)

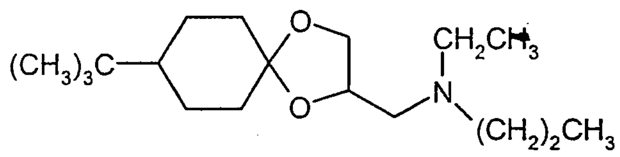

(I)

(Spiroxamine)

und

(1) der Verbindung der Formel (II) (Referenz: WO 96/16048)

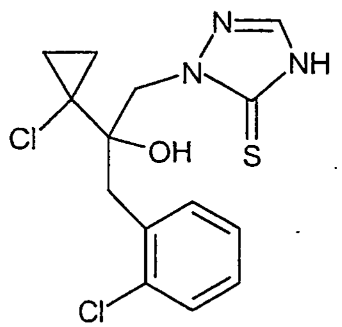

(II)

(Prothioconazole)

und

(2) der Verbindung der Formel (III) (Referenz: EP-A-0 040 345)

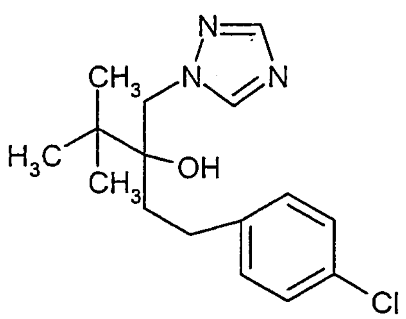

(III)

(Tebuconazole)

sehr gute fungizide Eigenschaften besitzt.

Überraschenderweise ist die fungizide Wirkung der erfindungsgemäßen Wirkstoffkombination aus den drei Wirkstoffen wesentlich höher als die Summe der Wirkungen der einzelnen Wirkstoffe bzw. die Wirkung der vorbekannten Mischungen aus jeweils zwei Wirkstoffen. Es liegt also ein nicht vorhersehbarer, echter synergistischer Effekt vor und nicht nur eine Wirkungsergänzung.

Der Wirkstoff der Formel (I) ist bekannt (vgl. z.B. EP-A-0 281 842). Die in der erfindungsgemäßen Wirkstoffkombination neben dem Wirkstoff der Formel (I) vorhandenen Wirkstoffe der Formeln (II) und (III) sind ebenfalls bekannt (vgl. Referenzen).

Die folgende Wirkstoffkombination ist ebenfalls bekannt:

Wirkstoffkombinationen enthaltend Verbindungen der Formel (II) und (III) oder (I) und (II): WO 98/47367.

Wirkstoffkombinationen enthaltend Verbindungen der Formel (I) und (III): EP 0 627 163.

Wenn die Wirkstoffe in der erfindungsgemäßen Wirkstoffkombination in bestimmten Gewichtsverhältnissen vorhanden sind, zeigt sich der synergistische Effekt besonders deutlich. Jedoch können die Gewichtsverhältnisse der Wirkstoffe in der Wirkstoffkombination in einem relativ großen Bereich variiert werden.

Im Allgemeinen entfallen auf 1 Gewichtsteil an Wirkstoff der Formel (I)
0,1 -10 Gewichtsteile, vorzugsweise 0,2 - 5 Gewichtsteile an Wirkstoff der Formel (II), und
0,05 -10 Gewichtsteile, vorzugsweise 0,1 - 5 Gewichtsteile an Wirkstoff der Formel (III).

Die erfindungsgemäße Wirkstoffkombination, gleichzeitig, gemeinsam oder getrennt angewandt, besitzt sehr gute fungizide Eigenschaften und lässt sich zur Bekämpfung von phytopathogenen Pilzen, wie Plasmodiophoromycetes, Oomycetes, Chytridiomycetes, Zygomycetes, Ascomycetes, Basidiomycetes und Deuteromycetes einsetzen.

Die erfindungsgemäße Wirkstoffkombination eignet sich besonders gut zur Bekämpfung von Getreidekrankheiten, wie Erysiphe, Cochliobolus, Pyrenophora; Rhynchosporium, Septoria, Fusarium, Pseudocercosporella und Leptosphaeria, Puccinia, Ustilago, Tilletia und Urocystis und zur Bekämpfung von Pilzbefall an Nichtgetreidekulturen, wie Wein, Obst, Erdnuss, Gemüse, beispielsweise Phythophthora, Plasmopara, Pythium sowie Echte Mehltaupilze wie zum Beispiel Sphaerotheca oder Uncinula und Blattfleckenerreger wie Venturia, Alternaria und Septoria sowie Rhizoctonia, Botrytis, Sclerotinia und Sclerotium.

Die gute Pflanzenverträglichkeit der Wirkstoffkombination in den zur Bekämpfung von Pflanzenkrankheiten notwendigen Konzentrationen erlaubt eine Behandlung von oberirdischen Pflanzenteilen, von Pflanz- und Saatgut, und des Bodens. Die erfindungsgemäße Wirkstoffkombination kann zur Blattapplikation oder auch als Beizmittel eingesetzt werden.

Die erfindungsgemäße Wirkstoffkombination eignet sich auch zur Steigerung des Ernteertrages. Sie ist außerdem mindertoxisch und weist eine gute Pflanzenverträglichkeit auf.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Die erfindungsgemäße Wirkstoffkombination kann in die üblichen Formulierungen überführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe bzw. der Wirkstoffkombinationen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen infrage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Butan, Propan, Stickstoff und Kohlendioxid. Als feste Trägerstoffe kommen infrage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstängel. Als Emulgier- und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycolether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im Allgemeinen zwischen 0,1 und 95 Gew.-% Wirkstoffe, vorzugsweise zwischen 0,5 und 90 %.

Die erfindungsgemäße Wirkstoffkombination kann als solche oder in ihren Formulierungen auch in Mischung mit weiteren bekannten Fungiziden, Bakteriziden, Akariziden, Nematiziden oder Insektiziden verwendet werden - insbesondere bei der Behandlung von Saatgut -, um so z.B. das Wirkungsspektrum zu verbreitern oder Resistenzentwicklungen vorzubeugen.

Auch eine Mischung mit anderen bekannten Wirkstoffen, wie Herbiziden oder mit Düngemitteln und Wachstumsregulatoren ist möglich.

Die Verbindungen (I), (II) und (III) können gleichzeitig, und zwar gemeinsam oder getrennt, oder nacheinander aufgebracht werden, wobei die Reihenfolge bei getrennter Applikation im Allgemeinen keine Auswirkung auf den Bekämpfungserfolgt hat.

Die Wirkstoffkombination kann als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden. Die Anwendung geschieht in üblicher Weise, z.B. durch Gießen, Verspritzen, Versprühen, Verstreuen, Verstreichen, Trockenbeizen, Feuchtbeizen, Nassbeizen, Schlämmbeizen oder Inkrustieren.

Beim Einsatz der erfindungsgemäßen Wirkstoffkombination können die Aufwandmengen je nach Applikationsart innerhalb eines größeren Bereichs variiert werden. Bei der Behandlung von Pflanzenteilen liegen die Aufwandmengen an Wirkstoffkombination im Allgemeinen zwischen 0,1 und 10 000 g/ha, vorzugsweise zwischen 10 und 1000 g/ha. Bei der Saatgutbehandlung liegen die Aufwandmengen an Wirkstoffkombination im Allgemeinen zwischen 0,001 und 50 g pro Kilogramm Saatgut, vorzugsweise zwischen 0,01 und 10 g pro Kilogramm Saatgut. Bei der Behandlung des Bodens liegen die Aufwandmengen an Wirkstoffkombination im Allgemeinen zwischen 0,1 und 10 000 g/ha, vorzugsweise zwischen 1 und 5 000 g/ha.

Die gute fungizide Wirkung der erfindungsgemäßen Wirkstoffkombination geht aus den nachfolgenden Beispielen hervor. Während die einzelnen Wirkstoffe in der fungiziden Wirkung Schwächen aufweisen, zeigen die Kombinationen aus drei Wirkstoffen eine Wirkung, die über eine einfache Wirkungssummierung hinausgeht.

Ein synergistischer Effekt liegt bei Fungiziden immer dann vor, wenn die fungizide Wirkung der Wirkstoffkombination größer ist als die Summe der Wirkungen der einzeln applizierten Wirkstoffe.

Die zu erwartende Wirkung für eine gegebene Kombination von 2 oder 3 Wirkstoffen kann nach S.R. Colby ("Calculating Synergistic and Antagonistic Responses of Herbicide Combinations", Weeds 1967, 15, 20-22) wie folgt berechnet werden:

Wenn

- X den Wirkungsgrad beim Einsatz des Wirkstoffes A in einer Aufwandmenge von $\underline{m}$ g/ha bedeutet,
- Y den Wirkungsgrad beim Einsatz des Wirkstoffes B in einer Aufwandmenge von $\underline{n}$ g/ha bedeutet,
- Z den Wirkungsgrad beim Einsatz des Wirkstoffes C in einer Aufwandmenge von $\underline{r}$ g/ha bedeutet,
- $E_1$ den Wirkungsgrad beim Einsatz der Wirkstoffe A und B in Aufwandmengen von $\underline{m}$ und $\underline{n}$ g/ha bedeutet und
- $E_2$ den Wirkungsgrad beim Einsatz der Wirkstoffe A und B und C in Aufwandmengen von $\underline{m}$ und $\underline{n}$ und $\underline{r}$ g/ha bedeutet,

dann ist

$$E_1 = X + Y - \frac{X \cdot Y}{100}$$

und für eine Kombination aus 3 Wirkstoffen:

$$E_2 = X + Y + Z - \frac{X \cdot Y - X \cdot Z - Y \cdot Z}{100} + \frac{X \cdot Y \cdot Z}{10000}$$

Dabei wird der Wirkungsgrad in % ermittelt. Es bedeutet 0 % ein Wirkungsgrad, der demjenigen der Kontrolle entspricht, während ein Wirkungsgrad von 100 % bedeutet, dass kein Befall beobachtet wird.

Ist die tatsächliche fungizide Wirkung größer als berechnet, so ist die Kombination in ihrer Wirkung überadditiv, d.h. es liegt ein synergistischer Effekt vor. In diesem Fall muss der tatsächlich beobachtete Wirkungsgrad größer sein als der aus der oben angeführten Formel errechnete Wert für die erwarteten Wirkungsgrade $E_1$ bzw. $E_2$.

Die Erfindung wird durch das folgende Beispiel veranschaulicht. Die Erfindung ist jedoch nicht auf das Beispiel limitiert.

## Beispiele

### Beispiel 1

**Erysiphe-Test (Weizen) / protektiv**

Zur Herstellung einer zweckmäßigen Wirkstoffzubereitung verdünnt man eine handelsübliche Formulierung von Wirkstoff oder Wirkstoffkombination mit Wasser auf die gewünschte Konzentration.

Zur Prüfung auf protektive Wirksamkeit besprüht man junge Pflanzen mit der Wirkstoffzubereitung in der angegebenen Aufwandmenge.

Nach Antrocknen des Spritzbelages werden die Pflanzen mit Sporen von Erysiphe graminis f.sp.tritici bestäubt.

Die Pflanzen werden in einem Gewächshaus bei einer Temperatur von ca. 20°C und einer relativen Luftfeuchtigkeit von ca. 80 % aufgestellt, um die Entwicklung von Mehltaupusteln zu begünstigen.

6 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, dass kein Befall beobachtet wird.

Die erfindungsgemäße Wirkstoffkombination zeigt sehr gute fungizide Eigenschaften.

**Tabelle 1**

| Erysiphe-Test (Weizen) / protektiv | | |
|---|---|---|
| Wirkstoff | Aufwandmenge an Wirkstoff in g/ha | Wirkungsgrad in % |
| Bekannt:<br>(I) Spiroxamine | 125 | 33 |
| (II) Prothioconazole | 125 | 78 |
| (III) Tebuconazole | 125 | 78 |
| Erfindungsgemäß:<br>(I) + (II) + (III) 1:0,64:0,64 | 55+35+35 | 100 |

### Beispiel 2

**Leptosphaeria nodorum-Test (Weizen) / kurativ**

Zur Herstellung einer zweckmäßigen Wirkstoffzubereitung verdünnt man eine handelsübliche Formulierung

von Wirkstoff oder Wirkstoffkombination mit Wasser auf die gewünschte Konzentration.

Zur Prüfung auf kurative Wirksamkeit werden junge Pflanzen mit einer Konidien-Suspension von Leptosphaeria nodorum besprüht. Die Pflanzen verbleiben 48 Stunden bei 20°C und 100 % relativer Luftfeuchtigkeit in einer Inkubationskabine und werden dann mit der Wirkstoffzubereitung in der angegebenen Aufwandmenge besprüht.

Die Pflanzen werden in einem Gewächshaus bei einer Temperatur von ca. 15°C und einer relativen Luftfeuchtigkeit von ca. 80 % aufgestellt.

12 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, dass kein Befall beobachtet wird.

Die erfindungsgemäße Wirkstoffkombination zeigt sehr gute fungizide Eigenschaften.

**Tabelle 2**

| Leptosphaeria nodorum-Test (weizen) / kurativ | | |
|---|---|---|
| Wirkstoff | Aufwandmenge an Wirkstoff in g/ha | Wirkungsgrad in % |
| Bekannt:<br>(I) Spiroxamine | 500 | 0 |
| (II) Prothioconazole | 500 | 20 |
| (III) Tebuconazole | 500 | 40 |
| Erfindungsgemäß:<br>(I) + (II) + (III) 1:0,24:0,24 | 340+80+80 | 60 |

## Beispiel 3

**Fusarium nivale (var. majus)-Test (Weizen) / kurativ**

Zur Herstellung einer zweckmäßigen Wirkstoffzubereitung verdünnt man eine handelsübliche Formulierung von Wirkstoff oder Wirkstoffkombination mit Wasser auf die gewünschte Konzentration.

Zur Prüfung auf kurative Wirksamkeit werden junge Pflanzen mit einer Konidien-Suspension von Fusarium nivale var. majus besprüht. Die Pflanzen verbleiben 24 Stunden bei 15°C und 100 % relativer Luftfeuchtigkeit in einer Inkubationskabine. Anschließend besprüht man die Pflanzen mit der Wirkstoffzubereitung in der angegebenen Aufwandmenge.

Nach Antrocknen des Spritzbelages verbleiben die Pflanzen in einem Gewächshaus unter lichtdurchlässigen Inkubationshauben bei einer Temperatur von ca. 15°C und einer relativen Luftfeuchtigkeit von ca. 100 %.

11 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, dass kein Befall beobachtet wird.

Die erfindungsgemäße Wirkstoffkombination zeigt sehr gute fungizide Eigenschaften.

**Tabelle 3**

| Fusarium nivale (var. majus)-Test (Weizen) / kurativ | | | |
|---|---|---|---|
| Wirkstoff | Aufwandmenge an Wirkstoff in g/ha | Wirkungsgrad in %<br>gef.* | <br>ber.** |
| Bekannt:<br>(I) Spiroxamine | 140 | 17 | |
| (II) Prothioconazole | 55 | 17 | |
| (III) Tebuconazole | 55 | 33 | |
| Erfindungsgemäß:<br>(I) + (II) + (III) 1:0,4:0,4 | 140+55+55 | 100 | 54 |
| * gef. = gefundene Wirkung<br>** ber. = nach der Colby-Formel berechnete Wirkung | | | |

**Patentansprüche**

1. Wirkstoffkombination, enthaltend eine Verbindung der Formel (I)

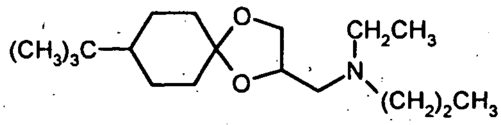

(I)
(Spiroxamine)

und

(1) eine Verbindung der Formel (II)

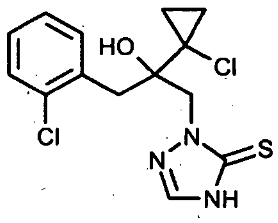

(II)
(Prothioconazole)

und
(2) eine Verbindung der Formel (III)

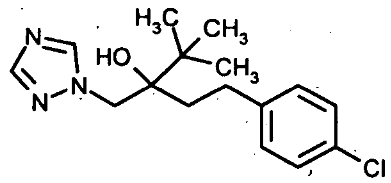

(III)
(Tebuconazole)

2. Wirkstoffkombination gemäß Anspruch 1, **dadurch gekennzeichnet, dass** in der Wirkstoffkombination das Gewichtsverhältnis von Wirkstoff der Formel (I)
zu Wirkstoff der Formel (II) 1:0,1 bis 1:10 beträgt und
zu Wirkstoff der Formel (III) 1:0,05 bis 1:10 beträgt.

3. Verfahren zur Bekämpfung von *phytopathogenen* Pilzen, **dadurch gekennzeichnet, dass** man eine Wirkstoffkombination wie in Anspruch 1 definiert auf die Pilze, deren Lebensraum oder die von ihnen freizuhaltenden Pflanzen, Pflanzenteile, Samen, Böden, Flächen, Materialien oder Räume einwirken lässt.

4. Verfahren gemäß Anspruch 3, **dadurch gekennzeichnet dass** man die Verbindung (I) gemäß Anspruch 1, die Verbindung (II) gemäß Anspruch 1 und die Verbindung (III) gemäß Anspruch 1 gleichzeitig gemeinsam oder getrennt oder nacheinander ausbringt.

5. Vermehrungsmaterial, das nach einem Verfahren gemäß Anspruch 3 behandelt wurde.

6. Fungizide Mittel, enthaltend einen Gehalt an einer Wirkstoffkombination wie in Anspruch 1 oder 2 definiert.

7. Verwendung der Wirkstoffkombination bzw. Mittel wie in den Ansprüchen 1, 2 und 6 definiert zur Bekämpfung von *phytopathogenen* Pilzen.

8. Verfahren zur Herstellung von fungiziden Mitteln, **dadurch gekennzeichnet, dass** man eine Wirkstoffkombination gemäß Anspruch 1 mit Streckmitteln und/oder oberflächenaktiven Stoffen vermischt.

## Claims

1. Active compound combination, comprising a compound of the formula (I)

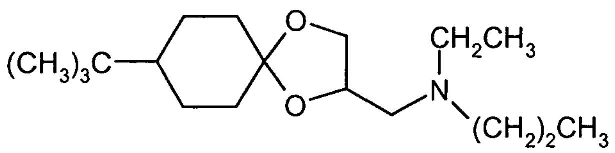

(I)

(spiroxamine)

and

(1)a compound of the formula (II)

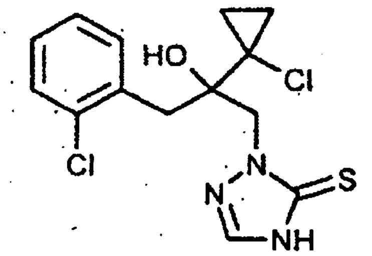

(II)

(prothioconazole)

and
(2) a compound of the formula (III)

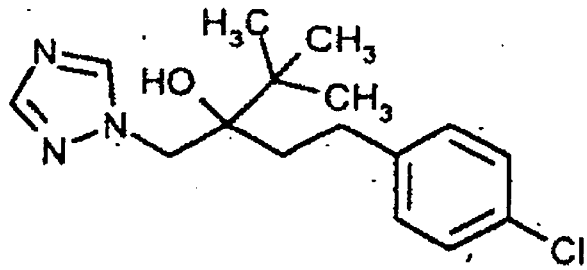

(III)

(tebuconazole)

2. Active compound combination according to Claim 1, **characterized in that** in the active compound combination the weight ratio of active compound of the formula (I)
to active compound of the formula (II) is from 1:0.1 to 1:10 and
to active compound of the formula (III) is from 1:0.05 to 1:10.

3. Method for controlling phytopathogenic fungi, **characterized in that** an active compound combination as defined in Claim 1 is allowed to act on the fungi, their habitat or the plants, parts of plants, seeds, soils, areas, materials or spaces to be kept free from them.

4. Method according to Claim 3, **characterized in that** the compound (I) according to claim 1, the compound (II) according to claim 1 and the compound (III) according to claim 1 are applied simultaneously, that is jointly or separately, or in succession.

5. Propagation material which has been treated by a method according to Claim 3.

6. Fungicidal composition, comprising an active compound combination content as defined in claim 1 or 2.

7. Use of the active compound combination or the composition as defined in claims 1, 2 and 6 for controlling phytopathogenic fungi.

8. Process for preparing fungicidal compositions, **characterized in that** an active compound combination according to Claim 1 is mixed with extenders and/or surfactants.

## Revendications

1. Combinaison de substances actives, contenant un composé de formule (I)

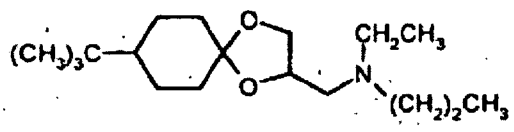

(I)
(Spiroxamine)

et

(1) un composé de formule (II)

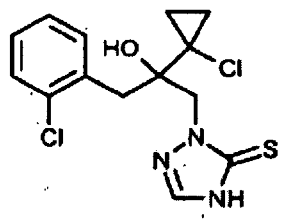

(II)
(Prothioconazole)

et
(2) un composé de formule (III)

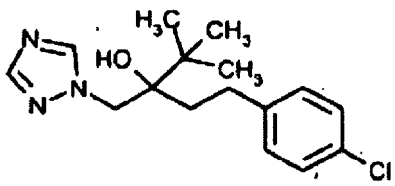

(III)
(Tébuconazole)

2. Combinaison de substances actives suivant la revendication 1, **caractérisée en ce que** le rapport en poids de la substance active de formule (I) dans la combinaison de substances actives est
de 1:0,1 à 1:10 relativement à la substance active de formule (II) et
de 1:0,05 à 1:10 relativement à la substance active de formule (III).

3. Procédé de lutte contre des champignons *phytopathogènes,* **caractérisé en ce qu'**on fait agir une combinaison de substances actives telle que définie dans la revendication 1 sur les champignons, sur leur milieu ou sur les plantes, parties de plantes, graines, sols, surfaces, matières et espaces qui doivent en être maintenus exempts.

4. Procédé suivant la revendication 3, **caractérisé en ce qu'**on épand le composé (I) suivant la revendication 1, le composé (II) suivant la revendication 1 et le composé (III) suivant la revendication 1 simultanément ensemble ou

séparément ou successivement.

5. Matière de multiplication, qui a été traitée par un procédé suivant la revendication 3.

6. Compositions fongicides, comprenant une teneur en une combinaison de substances actives telle que définie dans la revendication 1 ou 2.

7. Utilisation de la combinaison de substances actives ou des compositions telles que définies dans les revendications 1, 2 et 6 pour combattre des champignons *phytopathogènes.*

8. Procédé de préparation de compositions fongicides, **caractérisé en qu'**on mélange une combinaison de substances actives suivant la revendication 1 avec des diluants et/ou des substances tensio-actives.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0281842 A
- WO 9616048 A
- WO 9641533 A
- WO 9638040 A
- EP 0040345 A
- WO 9847367 A
- EP 0627163 A


### In der Beschreibung aufgeführte Nicht-Patentliteratur


- Pesticide Manual. 1997, 1144
- **S.R. Colby.** Calculating Synergistic and Antagonistic Responses of Herbicide Combinations. *Weeds,* 1967, vol. 15, 20-22